# EUROPÄISCHE PATENTANMELDUNG

(11) **EP 3 279 541 A1**
(43) Veröffentlichungstag der Anmeldung: **07.02.2018**
(21) Anmeldenummer: 17182871.8
(22) Anmeldetag: 24.07.2017
(51) Int. Cl.: F16L 53/00

(54) **BEHEIZBARE MEDIENFÜHRUNG SOWIE VERFAHREN ZUR HERSTELLUNG EINER BEHEIZBAREN MEDIENFÜHRUNG**

(30) Priorität: 03.08.2016 DE 102016214395
(71) Anmelder: LEONI Kabel Holding GmbH, 90402 Nürnberg (DE)
(72) Erfinder: DAMEROW, Thomas, 91785 Pleinfeld (DE); ERNST, Christian, 91781 Weißenburg (DE); JUNGER, Alexander, 91166 Georgensgmünd (DE); LÄMMER, Frank, 86161 Augsburg (DE)
(74) Vertreter: FDST Patentanwälte

(57) **Zusammenfassung**

Die beheizbare Medienführung 2 dient zur Führung eines Mediums. Sie weist ein sich in einer Längsrichtung erstreckendes rohrförmiges Führungselement 4 mit einem Mantel 6 aus einem Mantelmaterial auf, der einen Innenraum 10 für das Medium umgibt. Weiterhin weist das Führungselement 4 zumindest ein Heizelement 8 auf, welches sich mit dem Mantel 6 in Längsrichtung erstreckt und das im Mantelmaterial eingebettet ist.

## Beschreibung

Die Erfindung betrifft eine beheizbare Medienführung zur Führung eines Mediums sowie ein Verfahren zur Herstellung einer derartigen beheizbaren Medienführung.

Derartige beheizbare Medienführungen dienen zum Erwärmen oder Temperieren von gasförmigen oder flüssigen Fluiden innerhalb einer oftmals schlauchförmigen Leitung. Zur Beheizung des Mediums (Fluids) kann ein Heizelement eingesetzt werden, welches beispielsweise außen um das schlauchartige Führungselement herumgewickelt ist. Hierbei wirkt jedoch der Mantel des Führungselements als Isolator. Auch ist die Herstellung üblicherweise aufwendig.

Alternativ hierzu kann das Heizelement auch im Inneren des Führungselements geführt werden. Hier bestehen teilweise Probleme, sofern es sich bei dem zu fördernden Medium um ein aggressives Medium handelt, das unter Umständen das Heizelement angreift. Auch hier ist die Fertigung vergleichsweise aufwendig.

Ausgehend hiervon liegt der Erfindung die Aufgabe zugrunde, eine einfache herzustellende beheizbare Medienführung anzugeben.

Die Aufgabe wird gemäß der Erfindung gelöst durch eine beheizbare Medienführung mit den Merkmalen des Anspruchs 1 sowie durch ein Verfahren zur Herstellung einer derartigen Medienführung. Bevorzugte Ausgestaltungen sind in den Unteransprüchen enthalten. Die im Hinblick auf die Medienführung angeführten Vorteile und bevorzugten Ausgestaltungen sind sinngemäß auch auf das Verfahren zu übertragen und umgekehrt.

Die beheizbare Medienführung dient allgemein zur Führung eines Mediums, insbesondere eines Gas- oder auch flüssigen Fluids. Sie weist ein sich in einer Längsrichtung erstreckendes rohrförmiges Führungselement auf, welches insbesondere als ein vorzugsweise biegeflexibler Schlauch ausgebildet ist. Dieses Führungselement weist einen Mantel aus einem Mantelmaterial auf, welches einen Innenraum für das Medium umgibt. Das Führungselement dient daher zur Führung des Mediums und wird bei der bestimmungsgemäßen Verwendung vom Medium durchströmt. Ergänzend weist die Medienführung noch ein Heizelement auf, welches sich gemeinsam mit dem Mantel in Längsrichtung erstreckt. Bei dem Heizelement handelt es sich dabei insbesondere um einen Heizdraht, entweder ein blanker Heizdraht oder auch ein von einem Isoliermantel umgebenen Heizdraht. Sofern vorliegend von Heizdraht gesprochen wird, so wird hierunter sowohl ein einzelner Massivdraht als auch ein Bündel von Einzeldrähten verstanden. Bei der Medienführung ist das Heizelement, also speziell der Heizdraht dabei in dem Mantelmaterial des Mantels eingebettet. Über das Heizelement erfolgt bei der bestimmungsgemäßen Verwendung eine Temperierung, insbesondere eine Beheizung des Mediums.

Herstellungstechnisch wird hierbei derart vorgegangen, dass der Mantel des Führungselements mittels Extrusion hergestellt wird und dass bei diesem Extrusionsverfahren zugleich auch das Heizelement zugeführt wird und von der Extrusionsmasse umgeben wird, die zugleich das Mantelmaterial bildet.

Insgesamt ist durch diese Maßnahme daher ein besonders einfaches Herstellungsverfahren erreicht, bei dem das Heizelement bei der Herstellung des Mantels des rohrförmigen Führungselements quasi "inline" mit integriert wird. Es entfällt damit ein zusätzlicher Prozessschritt zur Anbringung des Heizelements am Führungselement.

Sofern vorliegend von "rohrförmig" gesprochen wird, so wird hierunter insbesondere ein umfangsseitig vollständig geschlossener Kanal vorzugsweise mit kreisrundem Querschnitt verstanden. Andere Querschnittsformen sind grundsätzlich jedoch auch möglich. Das Führungselement weist dabei insbesondere eine konstante Wanddicke auf. Bevorzugt ist das Führungselement dabei ringförmig ausgebildet. Unter ringförmig wird insbesondere kreisringförmig verstanden. Alternativ zur kreisförmigen Ausgestaltung des ringförmigen Führungselements ist das Führungselement nach Art eines Ovals oder auch rechteckförmig ausgebildet.

Zweckdienlicherweise ist gemäß einer ersten Ausführungsvariante das Heizelement unmittelbar in diesem rohr- oder schlauchförmigen Mantel eingebettet. Das Heizelement ist daher unmittelbarer Bestandteil des Mantels, welcher speziell die erwähnte konstante Wanddicke um seinen Umfang hat. Hierdurch ist - im Vergleich zu einer außenliegenden Anordnung des Heizelements - ein verbesserter Wärmeübertrag in den Innenraum des Führungselements erreicht, da weniger Mantelmaterial zwischen dem Heizelement und dem Innenraum vorliegt.

In bevorzugter Ausgestaltung ist weiterhin vorgesehen, dass der Mantel eine innere Mantellage sowie eine äußere Mantellage aufweist, wobei letztere im Vergleich zu der inneren Mantellage eine erhöhte thermische Isolationswirkung aufweist. Die äußere Mantellage dient daher zur Isolierung des Führungselements nach außen. Hierdurch sind die thermischen Verluste des im Innenraum strömenden Mediums reduziert.

Vorzugsweise wird die verbesserte oder erhöhte Isolationswirkung in der äußeren Mantellage durch einen höheren Gas- oder Luftanteil im Vergleich zu der inneren Mantellage erreicht.

Gemäß einer ersten Variante handelt es sich bei der äußeren Mantellage um eine geschäumte Mantellage, also um eine Mantellage, die eine geringere Dichte als die innere Mantellage aufweist und/oder um eine Mantellage mit einer Vielzahl von Lufteinschlüssen.

Alternativ zu der Ausbildung der äußeren Mantellage als eine geschäumte Mantellage oder auch ergänzend hierzu sind in die äußere Mantellage Hohlkammern eingebracht. Hierbei handelt es sich insbesondere um in Längsrichtung durchgehend verlaufende Hohlkanäle. Dies lässt sich bei der Extrusion herstellungstechnisch einfach umsetzen.

Bei der Ausgestaltung mit den beiden Mantellagen ist das Heizelement in bevorzugter Ausgestaltung in der inneren Mantellage angeordnet. Zum einen ist hierdurch der Wärmeeintrag in den Innenraum und in das Medium begünstigt und zugleich werden Wärmeverluste nach außen weitgehend vermieden.

Bei dieser Ausführungsvariante mit den beiden Mantellagen bestehen die beiden Mantellagen vorzugsweise aus dem gleichen Kunststoff. Alternativ besteht die äußere Mantellage aus einem anderen Kunststoff, beispielsweise aus einem Polyolefin (PE, PP...). Speziell bei dieser mehrlagigen Ausgestaltung wird der Mantel dabei in einem einzigen Extrusionsschritt mittels Koextrusion ausgebildet.

Gemäß einer zweiten bevorzugten grundsätzlichen Ausgestaltung ist das Heizelement außerhalb des Mantels angeordnet, jedoch weiterhin im Mantelmaterial eingebettet. Das Heizelement, speziell der Heizdraht ist außen an einer Oberfläche des insbesondere ringförmigen Mantels, der vorzugsweise eine konstante Wandstärke aufweist, entlang geführt. Gleichzeitig ist das Heizelement im Mantelmaterial eingebettet.

Das Mantelmaterial bildet bei der Extrusion neben dem Mantel auch weitere Bereiche außerhalb des eigentlichen Mantels aus. Das Mantelmaterial bildet also nicht nur den Mantel aus. Vielmehr werden durch das Mantelmaterial weitere, integral mit dem Mantel verbundene Abschnitte ausgebildet, innerhalb derer das Heizelement im Mantelmaterial eingebettet ist. Der Mantel und dieser zumindest eine weitere Bereich bilden bedingt durch die gemeinsame Extrusion ein einstückiges extrudiertes Bauteil, insbesondere einen extrudierten Profilstrang aus. Dieser Profilstrang weist also neben dem Mantel noch zumindest einen weiteren Bereich auf, in dem das Heizelement eingebettet ist.

Bei der zweiten Ausgestaltung mit der Anordnung des Heizelements außerhalb des Mantels ist das Heizelement bevorzugt von einer Mantelhaut aus dem Mantelmaterial überzogen, wobei diese Mantelhaut nach Art einer Ausbuchtung am beispielsweise ringförmigen Mantelmaterial ausgebildet ist. Zwischen der Außenseite des Mantels und der Innenseite der Mantelhaut ist das Heizelement eingebettet. Das Heizelement liegt dabei vorzugsweise unmittelbar an einer Außenseite des Mantels an. Im Querschnitt betrachtet ist das Führungselement beispielsweise nach Art einer Acht ausgebildet. Die eine kreisförmige Hälfte der Acht ist dabei deutlich größer als die andere und bildet das rohrförmige Führungselement aus. Die zweite kreisförmige Hälfte der Acht ist dabei deutlich kleiner und definiert sozusagen das zwischen dem Mantel und der Mantelhaut eingebettete Heizelement. Das Heizelement ist dabei bevorzugt wendeiförmig an der Außenseite des Mantels entlanggeführt.

Gemäß einer dritten grundsätzlichen Ausführungsvariante ist das Heizelement bevorzugt im Innenraum angeordnet, wobei das Heizelement mit dem Mantel über das Mantelmaterial verbunden und am Mantel damit auch fixiert ist. Insgesamt wird auch bei dieser Variante das Heizelement beim Extrusionsvorgang mit zugeführt, in diesem Fall jedoch innen im Innenraum verlaufend. Ähnlich wie bei der zweiten Ausführungsvariante wird daher ein Profilstrang aus dem Mantelmaterial ausgebildet, nunmehr mit einem Bereich im Innenraum des Mantels,

Dabei ist beispielsweise vorgesehen, dass das Heizelement unmittelbar innenliegend an einer Innenwandung des Mantels beispielsweise wendeiförmig verlaufend angeordnet ist, wie dies zuvor auch bei der außenwandigen Variante beschrieben wurde. Bei der innenwandigen Ausgestaltung ist ein besonders guter Wärmeeintrag und eine thermische Isolation nach außen erreicht.

Vorzugsweise ist dabei das Heizelement mit zumindest einer Strebe, die sich in radialer Richtung erstreckt, mit dem Mantel verbunden. Die Strebe besteht dabei ebenfalls aus dem Mantelmaterial und wird also mit dem Mantel mit extrudiert. Die Strebe erstreckt sich daher kontinuierlich über die gesamte Länge des Führungselements. Über die Strebe ist das Heizelement beabstandet vom Mantel gehalten. Zweckdienlicherweise ist dabei das Heizelement zumindest weitgehend und vorzugsweise exakt mittig im Innenraum gehalten. Das Heizelement verläuft daher insbesondere konzentrisch zu einer Mittenachse des Führungselements. Diese Mittenachse bildet üblicherweise zugleich eine neutrale Faser des Führungselements. Bei Biegebeanspruchungen erfährt daher das Heizelement in der Regel keine oder nur geringer Biegebeanspruchungen.

Die hier beschriebenen unterschiedlichen Varianten mit der Anordnung des Heizelements in den unterschiedlichen Bereichen, nämlich innerhalb des Mantels, außerhalb des Mantels sowie im Innenraum des Mantels, werden in bevorzugter Ausgestaltung miteinander in beliebigen Kombinationen kombiniert, d.h. es werden mehrere Heizelemente eingebettet, wobei die Heizelemente zumindest in zwei dieser Bereiche angeordnet sind.

Eine derartige beheizbare Medienführung wird erfindungsgemäß zum Fördern eines Mediums innerhalb der Medienführung eingesetzt, wobei das Medium mittels des Heizelements beheizt wird. Vorzugweise wird dabei das Medium auf eine vorgegebene Temperatur temperiert. Zur Temperierung ist dabei insbesondere eine Regelungseinrichtung mit Temperaturmessung und Ansteuern des Heizelements vorgesehen, um die gewünschte vorgegebene Temperatur zur erreichen bzw. zu halten.

Bei dem Medium handelt es sich gemäß einer ersten Ausführungsvariante vorzugsweise um ein Reduktionsmittel, insbesondere um eine Harnstofflösung. Das Reduktionsmittel wird dabei vorzugsweise einem Katalysator, speziell einem Katalysator zur Abgasreinigung zugeführt. Speziell wird das Reduktionsmittel für die sogenannte selektive katalytische Reduktion (SCR-Verfahren) und damit zur Stickoxidreduzierung eingesetzt. Diese wird insbesondere bei der Abgasreinigung speziell von Kraftfahrzeugen zunehmen eingesetzt. Grundsätzlich kann die beschriebene Medienführung auch für andere Anwendungsfälle herangezogen werden.

Ein weiteres Beispiel ist beispielsweise die Temperierung von Massen, beispielsweise in der Lebensmittelindustrie, um der Masse eine definierte Viskosität aufzuprägen. Bei der Masse handelt es sich beispielsweise um Schokolade.

Speziell bei der Verwendung von aggressiven Fluiden oder Medien werden geeignete Grundstoffe für das Mantelmaterial herangezogen. Hierbei handelt es sich insbesondere um fluorierte Kunststoffe oder auch polyamid-basierte Kunststoffe. Allgemein finden insbesondere Hochtemperaturwerkstoffe Einsatz.

Ausführungsbeispiele der Erfindung sind nachfolgend anhand der Figuren näher erläutert. Diese zeigen jeweils in vereinfachten Darstellungen:
- Figur 1: einen Querschnitt durch eine beheizbare Medienführung, bei dem das Heizelement unmittelbar in einem ringförmigen Mantel eingebettet ist
- Figur 2: einen Querschnitt der Medienführung, wobei ausgehend von der Variante gemäß Figur 1 zusätzlich noch eine äußere geschäumte Mantellage vorgesehen ist,
- Figur 3: einen Querschnitt der Medienführung gemäß einer weiteren Ausführungsvariante, bei der eine äußere Mantellage mit einer Vielzahl von Hohlkanälen vorgesehen ist,
- Figur 4: einen Querschnitt einer weiteren Ausführungsvariante, bei der das Heizelement außenseitig am Mantel angeordnet ist, sowie
- Figur 5: eine weitere Ausführungsvariante, bei der das Heizelement im Innenraum verlaufend angeordnet ist.

In den Figuren sind gleich wirkende Teile mit den gleichen Bezugszeichen versehen.

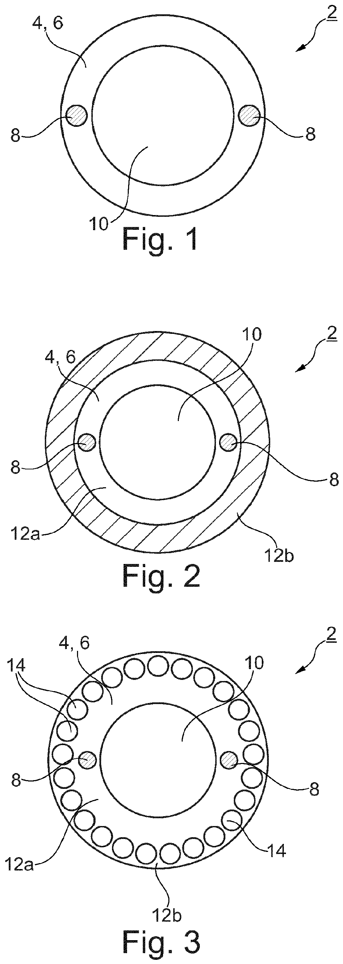

In den Figuren 1 - 5 sind jeweils vereinfachte Querschnittsdarstellungen einer beheizbaren Medienführung 2 gezeigt. Sämtliche Medienführungen 2 weisen dabei ein schlauchartiges Führungselement 4 auf, welches durch einen ringförmigen Mantel 6 mit insbesondere konstanter Wandstärke gebildet ist. Die Medienführung 2 umfasst weiterhin zumindest ein Heizelement 8, welches in sämtlichen Ausführungsbeispielen als ein Heizdraht ausgebildet ist. Bei diesem handelt es sich wahlweise um einen Massivdraht oder auch um einen Litzendraht.

Das Führungselement und der Mantel 6 sind dabei allgemein schlauchförmige Gebilde, die sich in einer Längsrichtung erstrecken, welche senkrecht zur Papierebene ausgerichtet ist. Die Medienführung 2 erstreckt sich dabei typischerweise über zumindest einige 10 cm oder auch über mehrere Meter. Endseitig ist an der Medienführung 2 in hier nicht näher dargestellter Weise ein Kupplungselement angeordnet, mit dem die Medienführung 2 an einem Anschluss eines Gehäuses oder Bauteils angeschlossen werden kann. Bei dem Kupplungselement handelt es sich beispielsweise um ein Steckkupplungselement. Zweckdienlicher-weise wird über das Kupplungselement zugleich auch das zumindest eine Heizelement 8 elektrisch kontaktiert. Hierzu wird das Heizelement 8 daher vom Mantel 6 gegebenenfalls separiert oder innerhalb des Mantels kontaktiert und über eine Leitung mit einer Steuer- und Versorgungseinheit zur Versorgung des Heizelements 8 mit elektrischer Energie verbunden. Bei dem Heizelement 8 handelt es sich allgemein um eine elektrische Widerstandsheizung.

In allen Ausführungsvarianten besteht grundsätzlich die Möglichkeit, um den Umfang verteilt mehrere Heizelemente 8, beispielsweise 2, 3, 4, 6 oder auch mehrere Heizelemente 8 und vorzugsweise gleichmäßig verteilt anzuordnen. In den Ausführungsbeispielen der Figuren 1 bis 3 sind beispielsweise jeweils zwei Heizelemente 8 dargestellt.

Bei der Ausführungsvariante gemäß der Figur 1 sind diese unmittelbar in den Mantel 6 integriert.

Bei der Ausführungsvariante gemäß der Figur 2 ist der Mantel 6 zweilagig mit einer inneren Mantellage 12a sowie einer äußeren Mantellage 12b ausgebildet. Die innere Mantellage 12 a ist dabei vorzugsweise identisch aufgebaut wie der zu der Figur 1 beschriebene Mantel 6. Bei der äußeren Mantellage 12b handelt es sich insbesondere um eine Isolierlage mit im Vergleich zu der inneren Mantellage 12a verbesserter thermischer Isolationswirkung. Speziell handelt es sich bei der äußeren Mantellage 12b um eine geschäumte Mantellage.

Alternativ hierzu besteht grundsätzlich auch die Möglichkeit, bei einer entsprechend großen Wanddicke des Mantels 6 die Heizelemente 8 nicht mittig sondern zum Innenraum 10 hin orientiert anzuordnen.

Bei der Ausführungsvariante der Figur 3 ist der Mantel 6 wiederum in zwei Mantellagen 12a, 12b aufgeteilt, die sich hinsichtlich ihrer Ausgestaltung unterscheiden. Bevorzugt bestehen sie jedoch aus dem gleichen Material. Bei dieser Ausführungsvariante ist das Mantelmaterial der äußeren Mantellage 12b mit einer Vielzahl von Hohlkanälen 14 durchsetzt. Diese sind wie in der Figur 3 dargestellt vorzugweise vollständig umlaufend angeordnet, wobei Materialstege zwischen zwei benachbarten Hohlkanälen 14 beispielsweise eine geringere Dicke haben im Vergleich zum Durchmesser der Hohlkanäle 14.

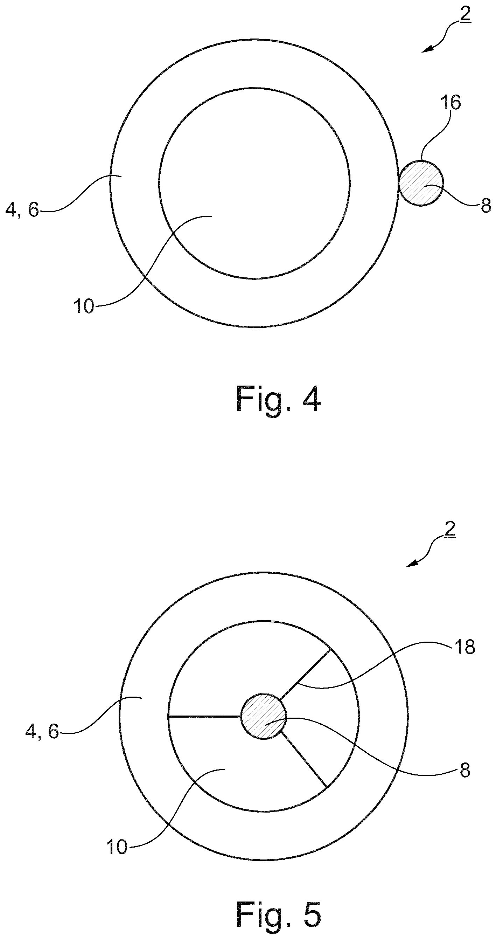

Bei der Ausführungsvariante der Figur 4 ist das Heizelement 8 an der Außenseite des Mantels 6 angeordnet. Der Heizdraht ist dabei von einer Mantelhaut 16 überzogen, die lediglich im Bereich des Heizelements 8 ausgebildet ist. Im Querschnitt betrachtet zeigt die Medienführung 2 daher insgesamt eine Form wie eine Acht.

Das Heizelement 8 ist dabei insbesondere wendeiförmig um den Umfang herum des Mantels 6 herum angeordnet.

Bei der Ausführungsvariante gemäß der Figur 5 ist schließlich das Heizelement 8 im Innenraum 10 angeordnet, und vorzugsweise verläuft das Heizelement 8 dabei exakt entlang einer Mittenachse der Medienführung 2. Auch hier ist das Heizelement 8 vom Mantelmaterial umgeben. Über zumindest eine und vorzugsweise mehrere Streben 18, bestehend ebenfalls aus Mantelmaterial ist das Heizelement 8 dabei an definierter Position im Innenraum 10 gehalten. Diese Streben 18 sind daher nach Art von Speichen eines Rades ausgebildet. Im Ausführungsbeispiel der Figur 5 sind drei Streben 18 dargestellt.

Herstellungstechnisch ist allen Ausführungsvarianten gemeinsam, dass sie durch ein Extrusionsverfahren hergestellt werden, bei dem zur Schlauchextrusion des Mantels 6 parallel noch das Heizelement 8 zugeführt wird, welches dadurch gleichzeitig von dem Mantelmaterial, welches zur Herstellung des Mantels 6 extrudiert wird, umgeben wird, sodass das Heizelement 8 also auch im Mantelmaterial eingebettet ist. Dies erlaubt eine besondere kostengünstige Herstellung derartiger Medienführungen 2 ohne manuelle Bearbeitungsschritte.

## Patentansprüche

1. Beheizbare Medienführung zur Führung eines Mediums, mit einem sich in einer Längsrichtung erstreckenden rohrförmigen Führungselement mit einem Mantel aus einem Mantelmaterial, der einen Innenraum für das Medium umgibt, sowie mit zumindest einem Heizelement, welches sich mit dem Mantel in Längsrichtung erstreckt und das im Mantelmaterial eingebettet ist.

2. Medienführung nach Anspruch 1, bei der der Mantel ringförmig ist und das Heizelement unmittelbar im ringförmigen Mantel eingebettet ist.

3. Medienführung nach Anspruch 1 oder 2, bei der der Mantel eine innere Mantellage sowie eine äußere Mantellage aufweist und die äußere Mantellage eine im Vergleich zur inneren Mantellage erhöhte thermische Isolationswirkung aufweist.

4. Medienführung nach Anspruch 3, bei der die äußere Mantellage einen höheren Gas- oder Luftanteil aufweist als die innere Mantellage.

5. Medienführung nach Anspruch 4, bei der es sich bei der äußeren Mantellage um eine geschäumte Mantellage handelt.

6. Medienführung nach einem der Ansprüche 3 bis 5, bei dem in die äußere Mantellage Hohlkammern eingebracht sind, die als in Längsrichtung durchgehend verlaufende Hohlkanäle ausgebildet sind.

7. Medienführung nach einem der Ansprüche 3 bis 6, bei der das Heizelement in der inneren Mantellage angeordnet ist.

8. Medienführung nach Anspruch 1, bei der das Heizelement außerhalb des Mantels im Mantelmaterial eingebettet ist.

9. Medienführung nach Anspruch 8, bei der das Heizelement außenliegend am Mantel entlanggeführt ist und von einer Mantelhaut aus dem Mantelmaterial nach außen hin umgeben ist.

10. Medienführung nach Anspruch 9, bei dem die Mantelhaut lediglich das Heizelement umgibt.

11. Medienführung nach Anspruch 1, bei der das Heizelement in dem Innenraum angeordnet ist und über das Mantelmaterial mit dem Mantel verbunden und fixiert ist.

12. Medienführung nach Anspruch 11, bei der das Heizelement mit zumindest einer Strebe aus dem Mantelmaterial mit dem Mantel verbunden ist und im Innenraum beabstandet vom Mantel gehalten ist.

13. Medienführung nach dem vorhergehenden Anspruch, bei der das Heizelement mittig im Innenraum gehalten ist.

14. Verfahren zur Herstellung einer beheizbaren Medienführung, bei dem ein rohrförmiges Führungselement extrudiert wird, und hierzu aus einem Mantelmaterial ein Mantel extrudiert wird, der einen Innenraum zur Führung eines Mediums umgibt, wobei bei der Extrusion zugleich ein Heizelement mit zugeführt wird, welches bei der Extrusion des Mantels von dem Mantelmaterial umgeben wird, wobei das Heizelement
- direkt dem Mantel zugeführt wird oder
- außerhalb des Mantel zugeführt wird oder
- innenseitig im Innenraum zugeführt wird und jeweils in das Mantelmaterial eingebettet wird.

15. Verfahren zur Führung und Temperierung eines Mediums mit Hilfe der Medienführung nach einem der Ansprüche 1 bis 13, wobei
- es sich bei dem Medium um ein Reduktionsmittel, wie eine Harnstofflösung handelt, welches für ein SCR-Verfahren verwendet wird oder wobei
- mittels der Medienführung bei der Produktion von Lebensmitteln eine für den Menschen verzehrbare Masse, wie beispielsweise Schokolade temperiert wird, um eine gewünschte Viskosität einzustellen.
